## Europäisches Patentamt

## European Patent Office

## Office européen des brevets

(19)

(11) Veröffentlichungsnummer: **0 184 155**
**B1**

(12)

# EUROPÄISCHE PATENTSCHRIFT

(45) Veröffentlichungstag der Patentschrift:
**25.01.89**

(51) Int. Cl.⁴: **A 01 D 55/00,** A 01 D 34/64

(21) Anmeldenummer: **85115174.6**

(22) Anmeldetag: **29.11.85**

(54) **Rotationsmähwerk.**

(30) Priorität: **05.12.84 DE 3444374**

(43) Veröffentlichungstag der Anmeldung:
**11.06.86 Patentblatt 86/24**

(45) Bekanntmachung des Hinweises auf die Patenterteilung:
**25.01.89 Patentblatt 89/4**

(84) Benannte Vertragsstaaten:
**AT CH DE FR GB LI NL**

(56) Entgegenhaltungen:
**EP-A-0 073 360**
**DD-A-54 828**
**DE-A-1 582 147**
**DE-A-2 917 738**
**US-A-4 048 790**

(73) Patentinhaber: **Alois Pöttinger Maschinenfabrik GmbH, A-4710 Grieskirchen (AT)**

(72) Erfinder: **Leposa, Wolfgang, Sonnfeldsiedlung 30, A-4710 Grieskirchen (AT)**
Erfinder: **Grossauer, Harald, Holzhüttenboden 18, A-3294 Langau (AT)**

(74) Vertreter: **Dupal, Helmut, Dipl- Ing., Jägerweg 12, A-4702 Wallern (AT)**

## Beschreibung

Die Erfindung betrifft ein Rotationsmähwerk mit einem Mähwerkbalken, der an seiner Unterseite Mähwerkzeuge trägt mit den im Oberbegriff des Anspruches 1 angeführten Merkmalen.

Bei Rotationsmähwerken dieser Gattung ist der Mähwerkbalken von Tragbalken getragen, von denen der äußere Tragbalken am inneren Tragbalken an einer waagrechten Schwenkachse gelagert ist und in unterschiedliche Schwenkstellungen für die Arbeitslagen und die Ruhelage des Mähwerkbalkens verschwenkbar ist. Die Verschwenkung wird mit einem fernbedienbaren, längenveränderlichen Stellmittel bewerkstelligt, das an den beiden Tragbalken an deren Oberseite angelenkt ist.

Aus der EP 0 073 360 ist eine solche Maschine bekannt geworden, bei der die Tragbalken in Fahrtrichtung hinter dem Mähwerkbalken und im Abstand oberhalb von diesem angeordnet sind und die waagrechte Schwenkachse, in Fahrtrichtung gesehen, im Bereich zwischen der Ausgangsprofilwelle eines Winkelgetriebes und der Eingangsprofilwelle eines Verteilergetriebes für den Antrieb der Mähwerkzeuge, vorgesehen ist, um die verbindende Gelenkwelle auch beim Hochschwenken des äußeren Tragbalkens in die Ruhelage des Mähwerkbalkens nicht abnehmen zu müssen. Bei zu weitem Hochschwenken des Mähwerkbalkens während der Arbeit, können durch zu starke Abwinkelungen der Gelenkwelle Beschädigungen an derselben auftreten. Des weiteren ist keine wirksame Entlastungsvorrichtung zur Gewichtsentlastung des Mähwerkbalkens vorgesehen, die aus räumlichen Gründen dem Stellmittel nebengeordnet sein müßte und deren Fehlen ungleichmäßige Belastungen zur Folge hat.

Aus der DE-A-2 917 738 ist ferner ein Rotationsmähwerk bekannt geworden, bei dem das Stellmittel in Form eines Hydraulikzylinders in das Innere des inneren Tragbalkens verlegt ist, dem auch eine Entlastungsvorrichtung bestehend aus mehreren Zugfedern nebengeordnet ist und bei dem der Tragbalken mit einer Konsole für die Lagerung des äußeren Tragbalkens um eine waagrechte Schwenkachse versehen ist.

Durch diese Anordnung ist eine erhebliche Anzahl von Bauteilen und ein aufwendiger Aufbau sowohl beim Stellmittel als auch bei der Entlastungsvorrichtung und den Übertragungsteilen für die Schwenkbewegung notwendig. Überdies kommt die waagrechte Schwenkachse des Mähwerkbalkens seitlich zu nahe an der Eingangsprofilwelle des Mähwerkantriebes heran, so daß sich ein verringerter Neigungswinkel für den Mähwerkbalken in Arbeitslage ergibt, wodurch das Mähen von sehr steilen Böschungen unmöglich wird oder die Gefahr von Beschädigungen an der Antriebsgelenkwelle in Kauf genommen wird.

Die Erfindung bezweckt ein Rotationsmähwerk der eingangs beschriebenen Gattung hinsichtlich der Ausgestaltung des Stellmittels und der Entlastungsvorrichtung, sowie deren Anordnung so zu verbessern, daß eine Vereinfachung erreicht wird und die beschriebenen Nachteile weitgehend vermieden werden.

Diese Aufgabe wird an einem Rotationsmähwerk der eingangs beschriebenen Gattung durch die Merkmale des Hauptanspruches gelöst.

Es ergibt sich dadurch eine besonders einfache und günstige Anordnung der Bauteile, insbesonders des Stellmittels, so daß eine höhere Verschwenkung des Mähwerkbalkens zum Mähen sehr steiler Böschungen möglich wird, ohne daß die zulässige Abwinkelung der Antriebsgelenkwelle überschritten wird, wobei die Anwendung eines Zwischenteiles eine besonders einfache Anordnung zur Absicherung gegen das Anfahren an Hindernissen ermöglicht.

Die Unteransprüche betreffen günstige Gestaltungsmöglichkeiten der Erfindung im Hinblick auf besonders einfache, zweckmäßige, hinsichtlich der mechanischen Beanspruchung günstige Ausführungen und auch bezüglich der Sicherung der Antriebsgelenkwelle gegen zu starke Abwinkelung während des Betriebes, sowie gegen das ungewollte Herabschwenken des Mähwerkbalkens aus der Ruhelage.

Durch die Anbringung eines Schwenkteiles und eines Anschlages sowie einer damit verbundenen Verriegelung ist die Absicherung gegen zu hohes Verschwenken während der Arbeit des Mähwerkes und gegen das Herabschwenken desselben aus der Ruhelage in äußerst einfacher, zweckmäßiger Weise möglich, die auch einer Fernbedienung mittels Seilzug und Rückstellfeder zugänglich ist.

Ein Ausführungsbeispiel der Erfindung wird an Hand der Zeichnung näher beschrieben. R
Es zeigen

Fig. 1    ein Rotationsmähwerk in Gesamtansicht in Fahrtrichtung gesehen,

Fig. 2    einen Ausschnitt aus Fig. 1 in vergrößertem Maßstab und

Fig. 3    eine Draufsicht auf einen Ausschnitt aus Fig. 1 in vergrößertem Maßstab.

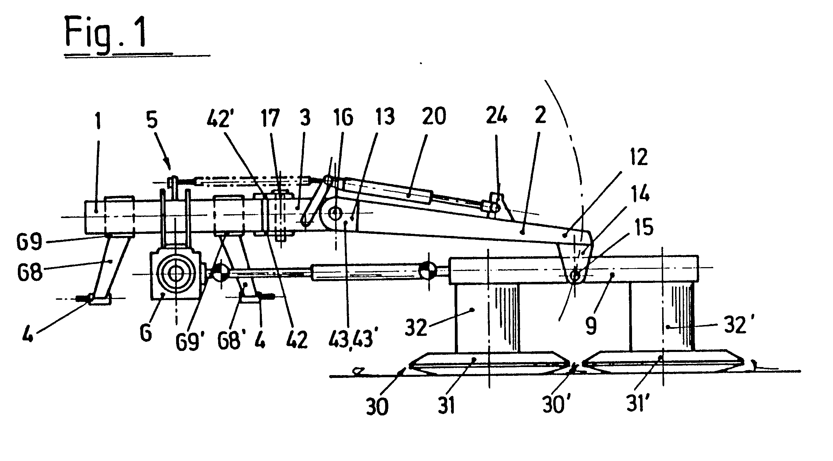

Das in Fig. 1 dargestellte Rotationsmähwerk besteht aus einem Mähwerkbalken 9, der an seiner Unterseite Mähwerkzeuge 30, 30' an Mähtellern 31, 31' die nach oben Trommeln 32, 32' anschließen, trägt und der von einem inneren Tragbalken 1 und einem äußeren Tragbalken 2, an dessen äußerem Ende 12 eine nach unten gerichtete, als Bügel ausgebildete Traglasche 14 befestigt ist, in der eine am Mähwerkbalken 9 befestigte Pendelachse 15 gelagert ist, pendelnd aufgehängt getragen ist. Die Tragbalken 1, 2 sind dabei im Abstand oberhalb des Mähwerkbalkens 9 angeordnet, wodurch die Anpassung des Mähwerkbalkens 9 an Bodenunebenheiten durch Pendeln um die Pendelachse 15 in sehr hohem Maße möglich ist.

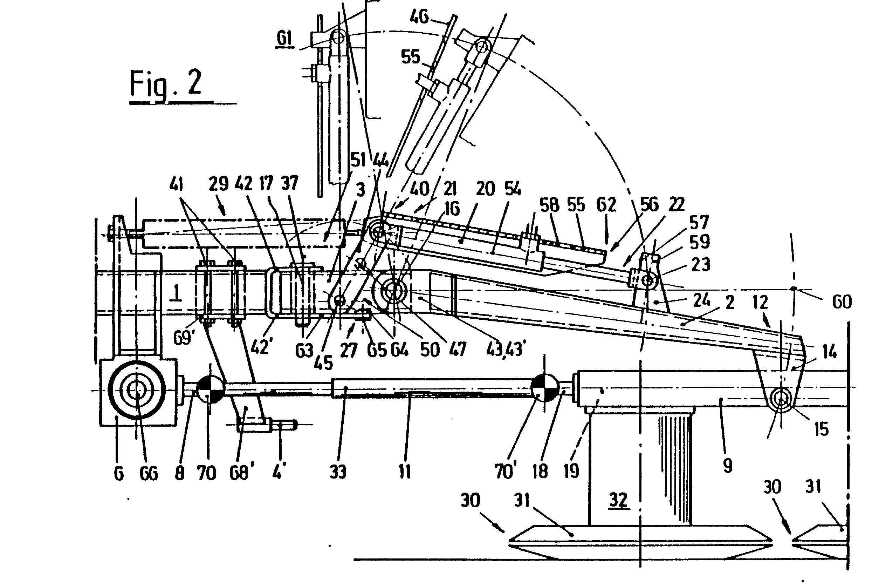

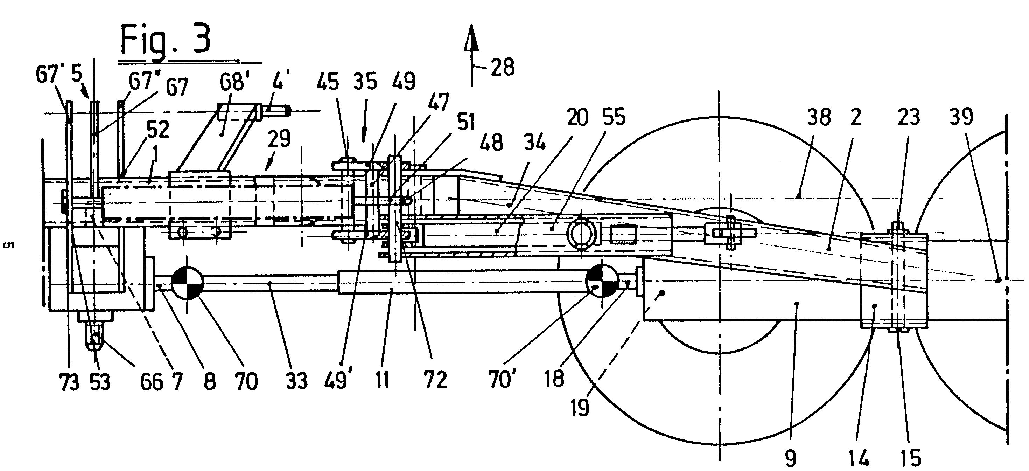

Der äußere Tragbalken 2 ist an seinem inneren Ende 13 an einem Zwischenteil 3, an einer waagrechten Schwenkachse 16 mit Lagerlaschen 43, 43' schwenkbar gelagert, die das Zwischenteil 3 beiderseits umgreifen. Das Zwischenteil 3 ist seinerseits um eine lotrechte Schwenkachse 17 verschwenkbar am inneren Tragbalken 1 gelagert, dessen Lagerlaschen 42 das Zwischenteil 3 übergreifen, wie dies in Fig. 2 und 3 wiedergegeben ist. Der Mähwerkbalken 9 mitsamt dem äußeren Tragbalken 2 sind mit ihren Längsachslinien 39, 34 quer zur Fahrtrichtung 28 von einer Sicherungsvorrichtung 27 gehalten, die aus einem an der unteren Lagerlasche 42' des inneren Tragbalkens 1 angesetzten Riegelteil 63, einem diesem auf dem Zwischenteil 3 gegenüberliegenden Lagerteil 64 und aus einem Verriegelungsstück 65 besteht, wobei letzteres im einfachsten Fall als Abscherschraube ausgebildet ist, die bei Überlastung z. B.beim Anstoßen des Mähwerkbalkens 9 gegen ein Hindernis, abgetrennt wird und die Schwenkbewegung um die lotrechte Achse 17 freigibt. An Stelle des Abscherbolzens kann das Verriegelungsstück 65 auch aus einer federbelasteten Riegelfalle bekannter Ausführung und Anordnung bestehen (nicht dargestellt).

Die Tragbalken 1, 2 sind als Vierkantrohre geformt, wobei der äußere Tragbalken 2 von der Lagerung an der waagrechten Schwenkachse 16 bis zu der Traglasche 14 hin schräg gegen die Fahrtrichtung 28 verlaufend angeordnet ist, so daß der Mähwerkbalken 9 zur Fahrtrichtung 28 im Abstand vor dem inneren Tragbalken 1 liegt. Durch diese Anordnung ist es möglich, daß auch die Verbindungslinie 33 zwischen Ausgangsprofilwelle 8 und Eingangsprofilwelle 18 mit der Längsachslinie 39 des Mähwerkbalkens fluchtet.

Der innere Tragbalken 1 ist mit Anlenkstellen 4, 4', 5 zum Anschluß an das Dreipunkthubwerk eines Schleppers versehen, von denen die obere Anlenkstelle 5 an einer in der Mitte zwischen den unteren Anlenkstellen 4, 4' am inneren Tragbalken verschweißten Tragplatte 67 angebracht ist. Die unteren Anlenkstellen 4, 4' sind an Trägern 68, 68' angeordnet, die mit Laschen 69, 69' den inneren Tragbalken 1 oben und unten übergreifen und mit Spannschrauben 41 befestigt, so daß die unteren Anlenkstellen 4, 4' je nach den Erfordernissen, versetzt werden können. Bei der oberen Anlenkstelle 5 sind dementsprechend weitere Tragplatten 67', 67'' neben der mittigen Tragplatte 67 angebracht.

Im Bereich zwischen den unteren Anlenkstellen 4, 4' ist ein Winkelgetriebe 6 an Traglaschen mit dem inneren Tragbalken 1 fest verbunden. Das Winkelgetriebe 6 ist mit einer Eingangsprofilwelle 7, zur Zapfwelle des Schleppers hin gerichtet, zum Anschluß einer Gelenkwelle (nicht dargestellt) und mit einer Ausgangsprofilwelle 8 zum Anschluß einer Gelenkwelle 11, die andernends an der Eingangsprofilwelle 18 eines im Mähwerkbalken 9 angeordneten Verteilergetriebes 19 für den Antrieb der Mähwerkzeuge 30, 30', angeschlossen ist. Zusätzlich ist das Winkelgetriebe 6 mit einem Durchtrieb, mit der nach hinten gerichteten weiteren Ausgangsprofilwelle 66 zum Anschluß von Anhängegeräten, wie z. B. einem Selbstladewagen, versehen.

Das Zwischenteil 3 ist mit den Schwenkachsen 16, 17 weitgehend in der Mitte 35 zwischen der Ausgangsprofilwelle 8 und der Eingangsprofilwelle 18 am inneren Tragbalken 1 liegend angeordnet, um eine gleichmäßige Abwinkelung beider Gelenke 70, 70' der Gelenkwelle 11 beim Verschwenken des äußeren Tragbalkens 2 mit dem Mähwerkbalken 9 sowohl um die waagrechte Schwenkachse 16, als auch um die lotrechte Schwenkachse 17 nach Auslösung der Sicherungsvorrichtung 27 zu erreichen, wodurch das Mähen sehr steiler Böschungen möglich ist und Beschädigungen der Gelenkwelle 11 beim Zurückschwenken des Mähwerkbalkens 9 gegen die Fahrtrichtung 28 bei Auslösen der Sicherungsvorrichtung 27 und das Abnehmen der Gelenkwelle beim Verschwenken des Mähwerkbalkens 9 in die Ruhelage vermeidbar sind.

Die lotrechte Schwenkachse 17 kann in Fahrtrichtung 28 geneigt ausgebildet sein, damit der nach hinten verschwenkte Mähwerkbalken 9 nach Freigabe durch ein Hindernis unter dem eigenen Gewicht in die Arbeitslage quer zur Fahrtrichtung 28 nach vorne schwenkt. Der Abstand zwischen den Schwenkachsen 16, 17 soll dafür möglichst gering sein. Es ist möglich die Schwenkachsen 16, 17 schneidend anzuordnen und im besonderen das Zwischenteil 3 als Kreuzgelenk (nicht dargestellt) auszubilden. In diesem Falle ist es notwendig, daß das Kreuzgelenk mit Fortsätzen versehen ist, die mit der lotrechten Schwenkachse 17 starr verbunden sind, an denen das Pendel 44 und die Sicherungsvorrichtung 27 angebracht sind.

Zur Verschwenkung des äußeren Tragbalkens 2 mit dem Mähwerkbalken 9 in gegenüber dem inneren Tragbalken 1 unterschiedlich geneigte Arbeitslagen und in eine Ruhelage, in der der Mähwerkbalken 9 eine lotrechte oder noch darüberhinausgehende Lage einnimmt, ist ein fernbedienbares längenveränderliches Stellmittel 20 vorgesehen, das bei der beschriebenen Ausführungsform aus einem einseitig wirkenden hydraulischen Kraftzylinder besteht. Das Stellmittel 20 ist oberhalb der Tragbalken 1 und 2 angeordnet und mit dem äußeren Ende 22 an der Kolbenstange 71 an einem Bolzen 23, der im Lagerteil 24 gelagert ist, angelenkt. Das Lagerteil 24 ist auf dem äußeren Tragbalken 2 an einer Stelle verschweißt, die in Draufsicht in der Mitte zwischen der Längsachslinie 38 des inneren Tragbalkens 1 und der Längsachslinie 39 des Mähwerkbalkens 9 liegt, weil dann die auftretenden Kräfte in besonders günstiger Weise in die Tragbalkenkonstruktion einleitbar sind.

Das innere Ende 21 am Zylinder des Stellmittels 20 ist an einer Anlenkstelle 40 eines Pendels 44 oberhalb des Zwischenteiles 3 angelenkt, das an einer am unteren Ende angeordneten Pendelschwenkachse 45 zwischen den Schwenkachsen 16 und 17 auf dem Zwischenteil 3 gelagert ist.

Das Pendel 44, dessen Pendelschwenkachse 45 parallel zur waagrechten Schwenkachse 16 verlaufend, im Abstand 50 von dieser angebracht ist und mit einem Bolzen als Anschlag 47 versehen ist, der die seitlich außerhalb des Zwischenteiles 3 angeordneten Hebel 49, 49' starr verbindet und damit eine steife Hebelanordnung schafft. Am Pendel 44 greift eine Entlastungsvorrichtung 29 mit ihrem ersten Ende 51 an der Anlenkstelle 48 am Pendel 44 an und ist mit dem zweiten Ende 52 an einem Abstützteil 53 des inneren Tragbalkens 1 befestigt und als Zugfeder ausgebildet. Die Entlastung vom Gewicht des Mähwerkes ist durch Wahl der Spannung der Zugfeder möglich, die durch Verstellung der Verschraubung 73 am Abstützteil 53 geschieht. Die Anlenkstelle 48 der Entlastungsvorrichtung 29 und die Anlenkstelle 40 des Stellmittels 20 sind am Pendel 44 an einem Bolzen 72 angeordnet, der an den beiden Hebeln 49, 49' gelagert ist.

Wird das Zwischenteil 3 weggelassen, so daß der äußere Tragbalken 2 unmittelbar an dem inneren Tragbalken 1 mit der waagrechten Schwenkachse 16 gelagert ist, dann ist die Anlenkstelle 40 des inneren Endes 21 des Stellmittels 20 am Pendel 44, das dann am Tragbalken 1 gelagert ist, in der Achslinie 54 oberhalb der Schwenkachse 16 angeordnet.

Zum Hochschwenken des äußeren Tragbalkens 2 wird das Stellmittel 20 betätigt, worauf die Kolbenstange einfährt und das Pendel 44 sich mit dem Anschlag in Richtung auf den äußeren Tragbalken 2 zu an den Seiten des Zwischenteiles 3 anlegt. Anschließend beginnt das Hochschwenken des äußeren Tragbalkens 2 mit dem Mähwerkbalken 9. In abgesenkter Stellung des äußeren Tragbalkens 2 schwingt das Pendel 44, je nach Höhenlage des Mähwerkes am Boden, hin und her, während der Hydraulikzylinder nach Schließen eines Betätigungsventiles (nicht dargestellt) starr gestellt ist.

Dem Stellmittel 20 ist ein Schwenkteil 55 in Form einer Klappe, die aus einem U-Profil geformt ist, zugeordnet, das an dem Bolzen 72 der Anlenkstelle 40 für das innere Ende 21 des Stellmittels 20 verschwenkbar gelagert ist und das in eingelegter Lage 62 mit dem freien Ende 56 beim Verschwenken des äußeren Tragbalkens 2 in die Schwenkstellung 60 für die höchste Arbeitslage des Mähwerkbalkens 9 gegen einen Anschlag 57 des Lagerteiles 24 zur Anlage kommt und eine weitere Schwenkbewegung sperrt.

Bei ausgeschwenkter Lage 46 des Schwenkteiles 55 ist der äußere Tragbalken 2 bis in die Schwenkstellung 61 für die Ruhelage des Mähwerkbalkens 9 verschwenkbar. Das Schwenkteil 55 ist mit einer Ausnehmung als Riegelrast 58 versehen, in das eine am Lagerteil 24 angebrachte Riegelfalle 59 bei eingelegter Lage 62 des Schwenkteiles 55 eingerastet ist.

Das Schwenkteil 55 kann mit bekannten Mitteln, Seilzug und Rückholfeder, fernbedienbar gestaltet werden (nicht dargestellt). Die Wahl der Anlenkstelle 40 des Stellmittels 20 in ihrem Abstand von der Pendelschwenkachse 45 und der waagrechten Schwenkachse 16 ist so getroffen, daß die Verbindungslinie 54 der Angriffspunkte des Stellmittels 20 an den Anlenkstellen 40 und am Bolzen 23 bei allen Schwenkstellungen des äußeren Tragbalkens 2 mit Abstand oberhalb der waagrechten Schwenkachse 16 liegt.

**Legende:**

| | |
|---|---|
| 1 | innerer Tragbalken |
| 2 | äußerer Tragbalken |
| 3 | Zwischenteil |
| 4, 4' | untere Anlenkstelle |
| 5 | obere Anlenkstelle |
| 6 | Winkelgetriebe |
| 7 | Eingangsprofilwelle des Winkelgetriebes 6 |
| 8 | Ausgangsprofilwelle des Winkelgetriebes 6 |
| 9 | Mähwerkbalken |
| 10 | |
| 11 | Gelenkwelle an Ausgangsprofilwelle 8 |
| 12 | äußeres Ende des Tragbalkens 2 |
| 13 | inneres Ende des Tragbalkens 2 |
| 14 | Traglasche, als Tragbügel ausgebildet |
| 15 | Pendelachse des Nähwerkbalkens 9 |
| 16 | waagrechte Schwenkachse |
| 17 | lotrechte Schwenkachse |
| 18 | Eingangsprofilwelle des Verteilergetriebes 19 |
| 19 | Verteilergetriebe des Mähwerkbalkens 9 |
| 20 | längenveränderliches, fernbedienbares Stellmittel insbes. hydraulischer Kraftzylinder |
| 21 | inneres Ende des Stellmittels 20 |
| 22 | äußeres Ende des Stellmittels 20 |
| 23 | Bolzen des Lagerteiles 24 |
| 24 | Lagerteil des äußeren Tragbalkens 2 |
| 25 | Oberseite des Tragbalkens 2 |
| 26 | Unterseite des Tragbalkens 2 |
| 27 | Sicherungsvorrichtung |
| 28 | Fahrtrichtung |
| 29 | Entlastungsvorrichtung |
| 30, 30' | Mähwerkzeuge des Mähwerkbalkens 9 |
| 31, 31' | Mähteller der Mähwerkzeuge 30, 30' |
| 32, 32' | Trommel der Mähwerkzeuge 30, 30' |

| | |
|---|---|
| 33 | Verbindungslinie zwischen Ausgangsprofilwelle 8 und Eingangsprofilwelle 18 |
| 34 | Längsachslinie des Tragbalkens 2 |
| 35 | Mitte zwischen Ausgangsprofilwelle 8 und Eingangsprofilwelle 18 |
| 36 | Abstand der Schwenkachsen 16,17 voneinander |
| 37 | Achslinie der lotrechten Schwenkachse 17 |
| 38 | Längsachslinie des Tragbalkens 1 |
| 39 | Längsachslinie des Mähwerkbalkens 9 |
| 40 | Anlenkstelle des inneren Endes 21 des Stellmittels 20 |
| 41 | Spannschrauben der unteren Anlenkstellen 4,4' |
| 42, 42' | Lagerlaschen des Tragbalkens 1 |
| 43, 43' | Lagerlaschen des Tragbalkens 2 |
| 44 | Pendel |
| 45 | Pendelschwenkachse |
| 46 | ausgeschwenkte Lage des Schwenkteiles 55 |
| 47 | Anschlag des Pendels 44 |
| 48 | Anlenkstelle der Entlastungsvorrichtung 29 am Pendel 44 |
| 49, 49' | Hebel des Pendels 44 |
| 50 | Abstand zwischen Pendelschwenkachse 45 und waagrechter Schwenkachse 16 |
| 51 | erstes Ende der Entlastungsvorrichtung 29 |
| 52 | zweites Ende der Entlastungsvorrichtung 29 |
| 53 | Abstützteil des inneren Tragbalkens 1 |
| 54 | Verbindungslinie zwischen den Angriffpunkten des Stellmittels 20 |
| 55 | Schwenkteil des Stellmittels 20 |
| 56 | freies Ende des Schwenkteiles 55 |
| 57 | Anschlag des Lagerteiles 24 |
| 58 | Riegelrast des Schwenkteiles 55 |
| 59 | Riegelfalle des Lagerteiles 24 |
| 60 | Schwenkstellung des Tragbalkens 2 für die höchste Arbeitslage des Mähwerkbalkens 9 |
| 61 | Schwenkstellung des Tragbalkens 2 für die Ruhelage des Mähwerkbalkens 9 |
| 62 | eingelegte Lasche des Schwenkteiles 55 |
| 63 | Riegelteil der Sicherungsvorrichtung 27 |
| 64 | Lagerteil der Sicherungsvorrichtung 27 |
| 65 | Verriegelungsstück der Sicherungsvorrichtung 27 |
| 66 | weitere Ausgangsprofilwelle des Winkelgetriebes 6 |
| 67, 67', 67'' | Tragplatte mit oberer Anlenkstelle 5 |
| 68, 68' | Träger für die unteren Anlenkstellen 4,4' |
| 69, 69' | Laschen der unteren Anlenkstellen 4,4' |
| 70,70' | Gelenke der Gelenkwelle 11 |
| 71 | Kolbenstange |
| 72 | Bolzen des Pendels 44 |
| 73 | Verschraubung |

**Patentansprüche**

1. Rotationsmähwerk mit einem sich in seiner Arbeitsstellung quer zur Fahrtrichtung des Trägerfahrzeuges erstreckenden Mähwerkbalken (9), der an seiner Unterseite Mähwerkzeuge (30, 30') trägt und von einem, in Bezug auf das Trägerfahrzeug gesehen, äußeren Tragbalken (2) getragen ist, der an seinem inneren Ende (13) an einem inneren, zum Anschluß an das Trägerfahrzeug dienenden Tragbalken (1) um eine waagrechte Schwenkachse (16) bis zu einer festlegbaren Schwenkstellung (61) des äußeren Tragbalkens (2) für die Ruhelage des Mähwerkbalkens (9) verschwenkbar gelagert ist, wobei der äußere Tragbalken (2) mit einem fernbedienbaren, längenveränderlichen Stellmittel (20) gelenkig verbunden ist, dessen äußeres Ende (22) an einem Lagerteil (24) an der Oberseite des äußeren Tragbalkens (2) gelagert ist, dadurch gekennzeichnet, daß das innere Ende (21) des Stellmittels (20) an einer Anlenkstelle (40) eines sich nach oben erstreckenden Pendels (44) angelenkt ist, das seinerseits um eine Pendelschwenkachse (45) verschwenkbar gelagert ist, die parallel zu und in einem Abstand (50) von der waagrechten Schwenkachse (16) auf dem inneren Tragbalken (1) oder auf einem Zwischenteil (3) angeordnet ist, der für das Hochschwenken des äußeren Tragbalkens (2) in die Schwenkstellung (61) für die Ruhelage des Mähwerkbalkens (9) ausreichend ist, wobei das Pendel (44) mit einem Anschlag (47) zur Begrenzung seines Schwenkweges in Richtung auf den äußeren Tragbalken (2) hin versehen ist und daß an einer Anlenkstelle (48) des Pendels (44) mit ihrem ersten Ende (51) eine Entlastungsvorrichtung (29) angelenkt ist, die mit ihrem zweiten Ende (52) mit einem Abstützteil (53) des inneren Tragbalkens (1) verbunden ist.

2. Rotationsmähwerk nach Anspruch 1, dadurch gekennzeichnet, daß das Pendel (44) mit einer Anlenkstelle (40) für das Stellmittel (20) versehen ist, die gleichzeitig die Anlenkstelle (48) der Entlastungsvorrichtung (29) bildet und vorzugsweise aus einem Bolzen besteht.

3. Rotationsmähwerk nach einem der Ansprüche 1 oder 2, dadurch gekennzeichnet, daß das Zwischenteil (3), an dem der äußere Tragbalken (2) mit einer waagrechten Schwenkachse (16) gelagert ist, am inneren Tragbalken (1) an einer zumindest annähernd lotrechten Schwenkachse (17) schwenkbar gelagert und von einer Sicherungsvorrichtung (27) in einer, mit der Längsachse (34) des äußeren Tragbalkens (2) quer zur Fahrtrichtung (28) verlaufenden Lage gehalten ist.

4. Rotationsmähwerk nach einem der Ansprüche 1, 2 oder 3, dadurch gekennzeichnet, daß das Pendel (44) mit der Pendelschwenkachse (45) auf dem Zwischenteil (3) zwischen der waagrechten Schwenkachse (16) und der zumindest annähernd lotrechten Schwenkachse (17) angeordnet ist.

5. Rotationsmähwerk nach Anspruch 1 oder 2, dadurch gekennzeichnet, daß mit dem Stellmittel (20) ein Schwenkteil (55) gelenkig verbunden ist, das in einer eingelegten Lage (62) das Verschwenken des äußeren Tragbalkens (2) in der Schwenkstellung (60) für die höchste Arbeitslage des Mähwerkbalkens (9) mit der Anlage an einen Anschlag (57) am äußeren Tragbalken (2), vorzugsweise am Lagerteil (24) begrenzt.

5. Rotationsmähwerk nach Anspruch 5, dadurch gekennzeichnet, daß das Schwenkteil (55) an der Anlenkstelle (40) des Stellmittels (20) gelagert ist und vorzugsweise aus einer, aus einem U-Profil gebildeten Klappe besteht.

6. Rotationsmähwerk nach Anspruch 5 oder 6, dadurch gekennzeichnet, daß das Schwenkteil (55) am äußeren Tragbalken (2) oder dem Lagerteil (24) verschwenkbar gelagert ist und der Anschlag für das Schwenkteil (55) am Stellmittel (20) vorgesehen ist.

8. Rotationsmähwerk nach einem oder mehreren der Ansprüche 5 bis 7, dadurch gekennzeichnet, daß das Schwenkteil (55) mit einer Riegelrast (58) versehen ist, mit der in der festlegbaren Schwenkstellung (61) des äußeren Tragbalkens (2) für die Ruhelage des Mähwerkbalkens (9) eine Riegelfalle (59) in der eingelegten Lage (62) des Schwenkteiles (55) verrastbar ist oder umgekehrt.

**Revendications**

1. A rotary mower, with a mower cutter bar (9) which, in its working position, extends transversely to the direction of travel of the carrier vehicle, which cutter bar has on its underside moving tools (30, 30') and is carried by an outer support beam (2) as viewed relative to the carrier vehicle, which outer support beam is mounted on its inner end (13) on an inner support beam (1) connecting it to the carrier vehicle, so as to be pivotable about a horizontal pivot axle (16) as far as a fixable pivot position (61) of the outer support beam (2) for the rest position of the mower cutter beam (9), said outer support beam (2) being hingedly connected with a remotely operable, variable-length adjusting means (20), the outer end (22) of which is mounted in a bearing part (24) on the upper side of the outer support beam (2), characterised in that the inner end (21) of the adjusting means (20) is articulated to a hinge point (40) of an upwardly extending pendulum (44), which in turn is mounted pivotable about a pivot axle (45) which is arranged parallel to and at a distance (50) from the horizontal pivot axle (16) on the inner support beam (1) or on an intermediate part (3), said distance being sufficient for the upward pivoting of the outer support beam (2) into the position (61) for the rest position of the mower cutter bar (9), said pendulum (44) being provided with a stop (47) for limiting its pivotal trajectory in the direction of the outer support beam and that at a hinge point (48) of the pendulum (44) with its first end (51) a relieving device (29) is articulated, which device is connected with a support part (53) of the inner support beam (1).

2. A rotary mower according to Claim 1, characterised in that the pendulum (44) is provided with a hinge point (40) for the adjusting means (20) which simultaneously constitutes the hinge point (48) of the relieving device (29) and preferably consists of a bolt.

3. A rotary mower according to any one of Claims 1 or 2, characterised in that the intermediate part (3), on which the outer support beam (2) is mounted by means of a horizontal pivot axle (16), is pivotably mounted on an at least approximately vertical pivot axle (17) and is held by means of a securing device (27) in a position extending transversely to the direction of travel (28) with the longitudinal axis (34) of the outer support beam (2).

4. A rotary mower according to any one of Claims 1, 2 or 3, characterised in that the pendulum (44) with the pendulum pivot axle (45) is arranged on the intermediate part (3) between the horizontal pivot axle (16) and the at least approximately vertical pivot axle (17).

5. A rotary mower according to Claim 1 or 2, characterised in that the adjusting means (20) has a pivot part (55) connected therewith which, in the engaged position (62), limits the pivoting of the outer support beam (2) into the position (60) corresponding to the highest working position of the mower cutter beam (9) by coming to bear against a stop (57) on the outer support beam (2), preferably on the bearing part (24).

6. A rotary mower according to Claim 5, characterised in that the pivot part (55) is mounted on the hinge point (40) of the adjusting means (20) and preferably consists of a flap formed of a U-profile.

7. A rotary mower according to Claim 5 or 6, characterised in that the pivot part (55) is pivotably mounted on the outer support beam (2) or on the bearing part (24) and the stop for the pivot part (55) is provided on the adjusting means (20).

8. A rotary mower according to one or several of Claims 5 to 7, characterised in that the pivot part (55) is provided with a bolt catch (58), by means of which the lockable pivotal position (61) of the outer support beam (2) for the rest position of the mower cutter beam (9) a locking bolt (59)

can be arrested or freed in the engaged position (62) of the pivot part (55).

**Revendications**

1. Mécanisme de fauchage rotatif comprenant une barre du mécanisme de fauchage (9) s'étendant, dans sa position de travail, transversalement au sens de la marche du véhicule porteur, qui supporte sur son côté inférieur des outils de fauchage (30, 30') et qui est supportée par une poutre de support (2) externe par rapport au véhicule porteur, et qui est montée de façon pivotante à son extrémité interne (13) à une poutre de support interne (1) servant au raccordement avec le véhicule porteur autour d'un axe de pivotement horizontal (16) jusqu'à une position de pivotement (61) de la poutre de support externe (2) qui peut être fixée et qui est destinée à la position de repos de la barre du mécanisme de fauchage (9), la poutre de support externe (2) étant reliée de façon articulée à un moyen de commande (20) pouvant être commandé à distance et dont la longueur peut être modifiée, dont l'extrémité externe (22) est montée sur une pièce d'appui (24) sur le côté supérieur de la poutre de support externe (2), caractérisé en ce que l'extrémité interne (21) du moyen de commande (20) est articulée sur une position articulée (40) d'un support pendulaire (44) s'étendant vers le haut, qui est de son côté monté de façon pivotante autour d'un axe de pivotement (45) qui est parallèle et situé à une certaine distance (50) de l'axe de pivotement horizontal (16) et monté sur la poutre de support interne (1) ou sur une pièce intermédiaire (3) de longueur suffisante pour le pivotement en hauteur de la poutre de support externe (2) dans la position pivotée (61) correspondant à la position de repos de la barre du mécanisme de fauchage (9), le support pendulaire (44) étant muni d'une butée (47) pour limiter son mouvement de pivotement en direction de la poutre de support externe (2), et en ce qu'un dispositif de soulagement (29) est articulé dans une position articulée (48) du support pendulaire (44) par sa première extrémité (51), et est relié par sa seconde extrémité (52) à une pièce d'appui (53) de la poutre de support interne (1).

2. Mécanisme de fauchage rotatif selon la revendication 1, caractérisé en ce que le support pendulaire (44) est muni d'une position articulée (40) pour le moyen de commande (20), qui forme simultanément la position articulée (48) du dispositif de soulagement (29) et est constitué de préférence par un tourillon.

3. Mécanisme de fauchage rotatif selon la revendication 1 ou 2, caractérisé en ce que la pièce intermédiaire (3) sur laquelle est montée la poutre de support externe (2) par un axe de pivotement horizontal (16) est montée de façon pivotante sur la poutre de support interne (1) par un axe de pivotement (17) vertical ou du moins sensiblement vertical, et est maintenue avec l'axe longitudinal (34) dans une position transversale au sens de la marche (28) de la poutre de support externe (2) par un dispositif de fixation (27).

4. Mécanisme de fauchage rotatif selon l'une quelconque des revendications 1, 2 ou 3, caractérisé en ce que le support pendulaire (44) est monté par l'axe de pivotement (45) sur la pièce intermédiaire (3) entre l'axe de pivotement horizontal (16) et l'axe de pivotement vertical ou sensiblement vertical (17).

5. Mécanisme de fauchage rotatif selon la revendication 1 ou 2, caractérisé en ce qu'une pièce pivotante (55) est reliée de façon articulée au moyen de commande (20), cette pièce limitant dans une position avancée (62) le pivotement de la poutre de support externe (2) à la position pivotée (60) prévue pour la position de travail la plus haute de la barre du mécanisme de fauchage (9), par venue en appui contre une butée (57) sur la poutre de support externe (2), et de préférence sur la partie d'appui (24).

6. Mécanisme de fauchage rotatif selon la revendication 5, caractérisé en ce que la pièce pivotante (55) est montée sur la position articulée (40) du moyen de commande (20) et est constituée de préférence par un volet formé par un profilé en U.

7. Mécanisme de fauchage rotatif selon la revendication 5 ou 6, caractérisé en ce que la pièce pivotante (55) est montée de façon pivotante sur la poutre de support externe (2) ou sur la pièce d'appui (24) et en ce que la butée destinée à la pièce pivotante (55) est prévue sur le moyen de commande (20).

8. Mécanisme de fauchage rotatif selon l'une quelconque ou plusieurs des revendications 5 à 7, caractérisé en ce que la pièce pivotante (55) est munie d'un dispositif de verrouillage (58) dans lequel peut s'enclencher une clenche (59) dans la position avancée (62) de la pièce pivotante (55), ou inversement dans la position de pivotement (61) pouvant être fixée de la poutre de support externe (2) correspondant à la position de repos de la barre du mécanisme de fauchage (9).

# Fig.1

EP 0 184 155 B1

Fig. 2

# Fig. 3

EP 0 184 155 B1